# EUROPEAN PATENT APPLICATION

(11) **EP 4 506 880 A1**
(43) Date of publication of application: **12.02.2025**
(21) Application number: 23925355.2
(22) Date of filing: 25.09.2023
(51) Int. Cl.: G06Q 50/06, H02J 3/00, H02J 3/32, H02J 3/38

(54) **INFORMATION PROCESSING APPARATUS, ELECTRICITY STORAGE SYSTEM, AND INFORMATION PROCESSING METHOD**

(30) Priority: 28.02.2023 JP 2023030393
(71) Applicant: GreenBank Corporation, Nagoya-shi, Aichi 451-0045 (JP)
(72) Inventor: SUKIGARA Shigeki, Nagoya-shi, Aichi 451-0045 (JP)
(74) Representative: Scott, Stephen John
(86) International application number: PCT/JP2023/034785
(87) International publication number: WO 2024/180801

(57) **Abstract**

An information processing apparatus includes a memory, a communication interface, and a controller. The memory stores a cumulative value of an asset that is owned by a user and is in a predetermined form. The communication interface can communicate with a plurality of geographically distributed electricity storage apparatuses. The controller executes processing to add, to the cumulative value stored in the memory, the asset corresponding to an amount of supplied electricity supplied by the user to a first electricity storage apparatus included in the electricity storage apparatuses when acquiring the amount of supplied electricity via the communication interface, and processing to subtract, from the cumulative value, the asset corresponding to an amount of received electricity received by the user from a second electricity storage apparatus, different from the first electricity storage apparatus, included in the electricity storage apparatuses when acquiring the amount of received electricity via the communication interface.

## Description

### CROSS-REFERENCE TO RELATED APPLICATION

The present application claims priority to Japanese Patent Application No. 2023-030393 filed on February 28, 2023, the entire contents of which are incorporated herein by reference.

### TECHNICAL FIELD

The present disclosure relates to an information processing apparatus, an electricity storage system, and an information processing method.

### BACKGROUND

An electricity deposit system in which a power company or the like accepts deposits of surplus electricity from a user who owns electricity generation equipment has been proposed (see, for example, Patent Literature (PTL) 1). According to PTL 1, an electricity deposit apparatus receives the amount of electricity flowing in reverse from the user's solar power generation equipment to the electricity grid as the amount of deposited electricity, and calculates, based on this amount of deposited electricity, the fuel to be used in returning the deposited electricity or the amount of electricity to return. PTL 1 also describes the installation of a fuel supply facility in the case in which fuel is used for the return of electricity.

### CITATION LIST

### Patent Literature

PTL 1: JP 2019-197425 A

### SUMMARY

### (Technical Problem)

However, electricity deposit systems based on conventional technology do not actually store the deposited electricity, but only consider the electricity as having been deposited. The operator with which the electricity was deposited generates electricity equivalent to the deposited electricity and supplies the electricity to the user at the time of returning the electricity. The user receives the returned electricity at the same facility where the electricity generation equipment was installed. In this method, costs can be high because of the payment of wheeling charges to send and receive electricity to and from the operator who deposits the electricity. In addition, electricity stored at one location cannot be withdrawn and used by the user at another location. Therefore, technology for users to deposit electricity has room for improvement.

The present disclosure, conceived with these points in mind, thus aims to improve technology for depositing electricity.

### (Solution to Problem)

According to the present disclosure, (1) an information processing apparatus includes a memory storing a cumulative value of an asset that is owned by a user and is in a predetermined form associated with electricity, a communication interface configured to communicate with a plurality of geographically distributed electricity storage apparatuses, and a controller configured to execute processing to add, to the cumulative value stored in the memory, the asset corresponding to an amount of supplied electricity supplied by the user to a first electricity storage apparatus included in the plurality of electricity storage apparatuses when acquiring the amount of supplied electricity via the communication interface, and to execute processing to subtract, from the cumulative value, the asset corresponding to an amount of received electricity received by the user from a second electricity storage apparatus, different from the first electricity storage apparatus, included in the plurality of electricity storage apparatuses when acquiring the amount of received electricity via the communication interface.

(2) In the information processing apparatus of (1), the controller may be configured to guarantee exchange of the asset for electricity of any of the plurality of electricity storage apparatuses.

(3) In the information processing apparatus of (1) or (2), the asset in the predetermined form may be expressed at least partially as an amount of stored electricity that the user stores in the plurality of electricity storage apparatuses.

(4) In the information processing apparatus of (3), the plurality of electricity storage apparatuses may be configured to be capable of buying and selling electricity via an electricity network, and the asset in the predetermined form may be expressed at least partially as a virtual valuable corresponding to compensation for electricity sold by the user via the plurality of electricity storage apparatuses.

(5) In the information processing apparatus of (4), the virtual valuable may include at least one of cryptocurrency, electronic money, and points.

(6) In the information processing apparatus of (4) or (5), the controller may be configured to determine a chargeable capacity of the first electricity storage apparatus, and when acquiring an amount of supplied electricity from the user exceeding the chargeable capacity, to sell electricity exceeding the chargeable capacity and add, to the cumulative value of the asset owned by the user, the virtual valuable corresponding to the compensation obtained by selling the electricity.

(7) In the information processing apparatus of any one of (4) to (6), when receiving a request, from a user terminal used by the user, to view information on the asset of the user, the controller may be configured to transmit information, stored in the memory, including the amount of stored electricity owned by the user and the cumulative value of the virtual valuable as the information on the asset.

(8) In the information processing apparatus of (7), the controller may be configured to receive, from the user terminal, an instruction to receive electricity, the instruction specifying the second electricity storage apparatus and one of the amount of stored electricity and the virtual valuable, and when the user receives the electricity from the second electricity storage apparatus, the controller may be configured to subtract the asset corresponding to the amount of received electricity from the cumulative value of the specified one of the amount of stored electricity and the virtual valuable included in the asset of the user.

In the present disclosure, (9) an electricity storage system includes a plurality of geographically distributed electricity storage apparatuses, and an information processing apparatus including a memory storing a cumulative value of an asset that is owned by a user and is in a predetermined form associated with electricity, a communication interface configured to communicate with the plurality of electricity storage apparatuses, and a controller configured to execute processing to add, to the cumulative value stored in the memory, the asset corresponding to an amount of supplied electricity supplied by the user to a first electricity storage apparatus included in the plurality of electricity storage apparatuses when acquiring the amount of supplied electricity via the communication interface, and to execute processing to subtract, from the cumulative value, the asset corresponding to an amount of received electricity received by the user from a second electricity storage apparatus, different from the first electricity storage apparatus, included in the plurality of electricity storage apparatuses when acquiring the amount of received electricity via the communication interface.

In the present disclosure, (10) an information processing method is an information processing method to be executed by a controller of an information processing apparatus including a memory storing a cumulative value of an asset that is owned by a user and is in a predetermined form associated with electricity, a communication interface configured to communicate with a plurality of geographically distributed electricity storage apparatuses, and the controller, the information processing method including adding, to the cumulative value stored in the memory, the asset corresponding to an amount of supplied electricity supplied by the user to a first electricity storage apparatus included in the plurality of electricity storage apparatuses when the amount of supplied electricity is acquired via the communication interface, and subtracting, from the cumulative value, the asset corresponding to an amount of received electricity received by the user from a second electricity storage apparatus, different from the first electricity storage apparatus, included in the plurality of electricity storage apparatuses when acquiring the amount of received electricity via the communication interface.

### (Advantageous Effect)

According to the present disclosure, technology for depositing electricity can be improved.

### BRIEF DESCRIPTION OF THE DRAWINGS

In the accompanying drawings:
FIG. 1 is a configuration diagram illustrating an example of a system according to an embodiment;
FIG. 2 is a block diagram illustrating an example configuration of the information processing apparatus in FIG. 1;
FIG. 3 is a diagram illustrating an example of information on an electricity storage apparatus stored in a memory;
FIG. 4 is a diagram illustrating an example of information, stored in the memory, on electricity assets of a user;
FIG. 5 is a block diagram illustrating an example configuration of the electricity storage apparatus in FIG. 1;
FIG. 6 is a flowchart of processing executed by an information processing apparatus when charging an electricity storage apparatus;
FIG. 7 is a flowchart of processing executed by an information processing apparatus when a user views information on electricity assets using a user terminal;
FIG. 8 is a flowchart of processing executed by an information processing apparatus when a user inquires about available electricity storage apparatuses; and
FIG. 9 is a flowchart of processing executed by an information processing apparatus when a user receives electricity from an electricity storage apparatus.

### DETAILED DESCRIPTION

Embodiments of the present disclosure are described below, with reference to the drawings.

### (Overview of electricity storage system)

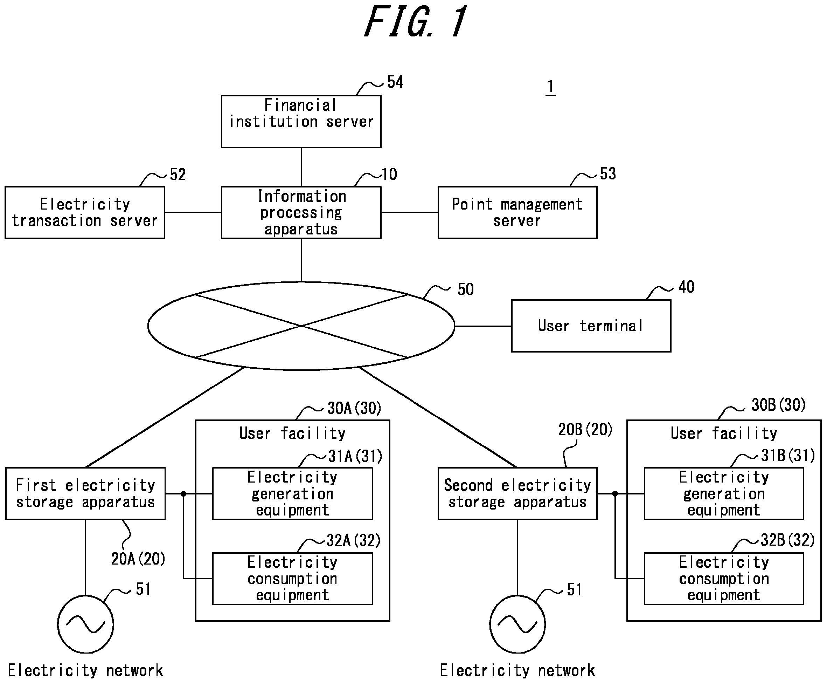

As illustrated in FIG. 1, the electricity storage system 1 of the present disclosure includes an information processing apparatus 10 and a plurality of geographically distributed electricity storage apparatuses 20 (first electricity storage apparatus 20A and second electricity storage apparatus 20B). The information processing apparatus 10 and the plurality of electricity storage apparatuses 20 can communicate with each other via the communication network 50. The electricity storage apparatus 20 is provided adjacent to a user facility 30 owned by the user. Alternatively, the electricity storage apparatus 20 may be provided inside the user facility 30. The user in the present disclosure is an individual, business, private organization, or public organization that uses an electricity storage service provided by the electricity storage apparatus 20. One electricity storage apparatus 20 may be used by one or more users. The communication network 50 may include the Internet or a VPN (Virtual Private Network).

The user facility 30 may, for example, be a private residence, a business, a commercial facility, or an electricity generation business. The user facility 30 includes either or both of electricity generation equipment 31 and electricity consumption equipment 32. The electricity generation equipment 31 may be solar power generation equipment or wind power generation equipment, but is not limited to these examples. The electricity consumption equipment 32 is equipment that consumes power and may include air conditioning, lighting, audio/visual equipment, mechanical equipment, and the like within the user facility 30. The electricity consumption equipment 32 may further include a charging station for an electric vehicle and/or chargers for portable information devices, such as smartphones, in the user facility 30.

The user can communicate with the information processing apparatus 10 via a user terminal 40. Examples of the user terminal 40 include portable information terminals, such as smartphones and tablet terminals, and Personal Computers (PCs). The user terminal 40 may be a general-purpose electronic device or a dedicated electronic device.

The information processing apparatus 10 may be communicably connected to an external electricity transaction server 52, point management server 53, and financial institution server 54. The information processing apparatus 10 may be connected to these servers via dedicated communication lines or a communication network 50.

In the electricity storage system 1, the user can receive electricity charged to the first electricity storage apparatus 20A included in the plurality of electricity storage apparatuses 20 from the second electricity storage apparatus 20B, which is different from the first electricity storage apparatus 20A, included in the plurality of electricity storage apparatuses 20. The reverse is also similarly possible. Thus, from the user's point of view, the plurality of electricity storage apparatuses 20 appear to be a single virtual storage battery.

For example, the user can store electricity by charging the electricity generated by the electricity generation equipment 31A in the user facility 30A to the first electricity storage apparatus 20A. The user can draw electricity equivalent to the stored electricity from the second electricity storage apparatus 20B by charging an electric vehicle at a charging station for electric vehicles provided as electricity consumption equipment 32B in a user facility 30B, which is different from the user facility 30A. Conversely, another user may store electricity generated by electricity generation equipment 31B in the user facility 30B in the second electricity storage apparatus 20B and then use the electricity consumption equipment 32A in the user facility 30A to draw electricity equivalent to the stored electricity from the first electricity storage apparatus 20A. At this time, it is not necessary to actually send and receive electricity between the first electricity storage apparatus 20A and the second electricity storage apparatus 20B.

The electricity that the user stores in the electricity storage system 1 is referred to as an electricity asset in the present application. The electricity asset is an asset associated with the electricity owned by the user and is managed by the information processing apparatus 10 for each user. The electricity asset that the user stores in the electricity storage system 1 is, for example, represented in the form of the amount of stored electricity, which indicates the amount of electricity that the user stores in the plurality of electricity storage apparatuses 20, and in the form of virtual valuables corresponding to compensation for electricity sold by the user to the plurality of electricity storage apparatuses 20. A virtual valuable refers to something that has no physical substance but has substantial value and includes forms such as cryptocurrency, electronic money, and points. An example of a virtual valuable is virtual currency that is backed by a guarantee of exchange for electricity. This can be referred to as electricity cryptocurrency. Electricity cryptocurrency can be exchanged and transferred among a plurality of users.

Each electricity storage apparatus 20 is connected to an electricity network 51 (electricity grid) and can buy and sell electricity to and from other electricity generation businesses connected to the electricity network 51. The electricity transaction server 52 is a server that mediates electricity transactions. The information processing apparatus 10 monitors the remaining battery capacity of each electricity storage apparatus 20 and can buy and sell electricity to and from external electricity providers and the like via the electricity transaction server 52. The compensation when buying and selling electricity to and from each electricity storage apparatus 20 includes a case in which the compensation fluctuates according to the supply and demand of the electricity market, and a case in which compensation is fixed in advance by contract or the like. The case in which the compensation for buying and selling electricity fluctuates is assumed in the explanation below.

Electricity assets in the form of virtual valuables can be exchanged for cash or for points in general point services operated by distributors and the like. The information processing apparatus 10 can cooperate with the financial institution server 54 so that the cash redeemed from an electricity asset is transferred to the user's bank account. The information processing apparatus 10 can also cooperate with the point management server 53 to exchange an electricity asset for points in a general point service. The information processing apparatus 10 may exchange settlement information pertaining to cash and/or point exchange with the financial institution server 54 and/or the point management server 53 to execute settlement processing.

The following is a more detailed description of the components forming the electricity storage system 1 of the present disclosure.

### (Information Processing Apparatus)

The information processing apparatus 10 is a computer such as a server apparatus. The information processing apparatus 10 may be any general-purpose computer, such as a Personal Computer (PC) and workstation, or a dedicated computer. The information processing apparatus 10 may be a server belonging to a cloud computing system or the like. The information processing apparatus 10 may read a dedicated program and execute the processing of the present disclosure. The information processing apparatus 10 is not limited to a single computer. The functions of the information processing apparatus 10 may be distributed and executed by a plurality of computers located at the same or different locations.

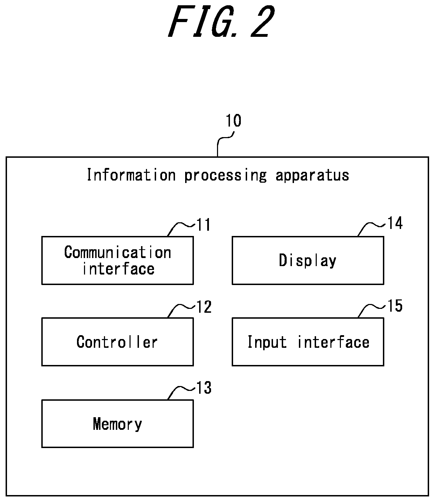

As illustrated in FIG. 2, the information processing apparatus 10 includes a communication interface 11, a controller 12, a memory 13, a display 14, and an input interface 15.

The communication interface 11 includes at least one interface for external communication that connects to the communication network 50. The interface for external communication may be either a wired or wireless communication interface. The communication interface 11 is configured to communicate with external apparatuses (such as the electricity storage apparatus 20 and the user terminal 40). The communication interface 11 receives data for use in operation of the information processing apparatus 10 and transmits data resulting from operation of the information processing apparatus 10 to an external destination.

The controller 12 executes various processing related to the operations of the information processing apparatus 10 and controls each component of the information processing apparatus 10. The controller 12 includes at least one processor, at least one dedicated circuit, or a combination thereof. The processor includes a general-purpose processor, such as a central processing unit (CPU), and/or a dedicated processor specialized for a particular processing. The controller 12 achieves control functions by executing programs stored in the memory 13.

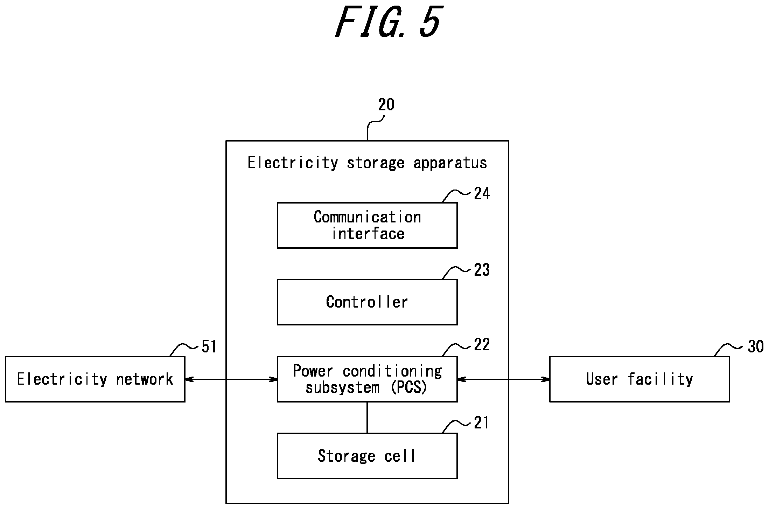

The controller 12 can acquire information on the remaining battery capacity of the storage battery 21 (see FIG. 5) from each electricity storage apparatus 20 via the communication interface 11. The controller 12 can also acquire information, via a communication interface 24, on the amount of electricity supplied to or received from the electricity storage apparatus 20 for each user and can add or subtract the cumulative value of the electricity asset as stored in the memory 13, described below.

The memory 13 includes at least one semiconductor memory, at least one magnetic memory, at least one optical memory, or a combination of at least two of these. The memory 13 functions as, for example, a main memory, an auxiliary memory, or a cache memory. The memory 13 stores programs and data to be used for operation of the information processing apparatus 10 and data resulting from operation of the information processing apparatus 10.

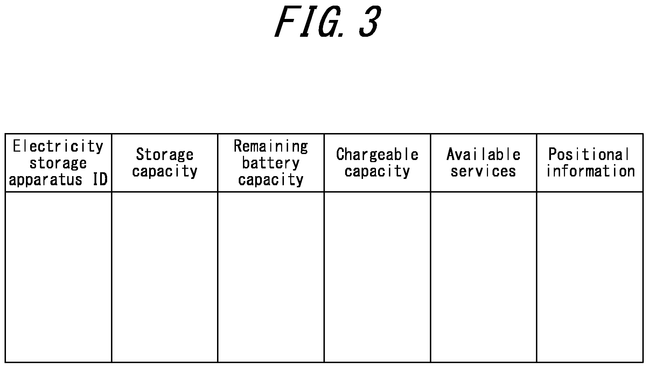

The memory 13 stores information on each electricity storage apparatus 20. For example, as illustrated in FIG. 3, the memory 13 stores a storage battery ID, which is the identification information of each storage battery, a storage capacity, a remaining battery capacity, a chargeable capacity, available services, and positional information. The blank spaces in FIG. 3 contain information on each electricity storage apparatus 20. The storage capacity is the maximum capacity that can be stored in the storage battery 21 (see FIG. 5) included in the electricity storage apparatus 20. In the present disclosure, the remaining battery capacity means the amount of available electricity stored in the storage battery 21. The remaining battery capacity may be replaced by the term "SOC (State Of Charge)", which indicates the rate of charge or charging status. The remaining battery capacity may be sequentially updated by information that the controller 12 continuously acquires from the electricity storage apparatus 20. The chargeable capacity is the capacity that can be charged in the storage battery 21. In a case in which there is a reason for not charging the storage battery 21 to full capacity, the chargeable capacity is smaller than the result of subtracting the remaining battery capacity from the storage capacity. For example, the chargeable capacity can be set in consideration of arrangements with the connected electricity network, legal regulations, or the like. The available services are the services available as electricity consumption equipment 32 at the user facility 30 where the electricity storage apparatus 20 is installed or at a user facility 30 adjacent to the electricity storage apparatus 20. The available services include charging services for electric vehicles and charging services for portable information devices such as smartphones. The positional information includes information on the latitude and longitude of the position where the electricity storage apparatus 20 is located, or information on a position on the road.

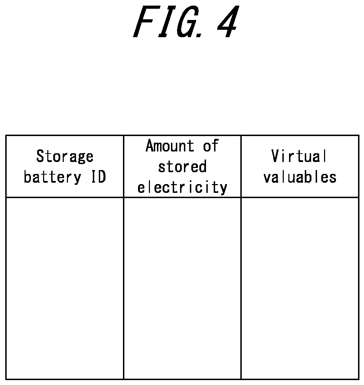

The memory 13 may store a cumulative value of the electricity assets for each registered user, as illustrated in FIG. 4. The electricity assets stored by the memory 13 include the amount of stored electricity and virtual valuables, such as electricity cryptocurrency. The blank spaces in FIG. 4 contain information on each user. When a user supplies power from the user facility 30 to the electricity storage apparatus 20, or when a user receives power from the electricity storage apparatus 20, the controller 12 adds or subtracts the cumulative value of the electricity assets of that user as stored in the memory 13.

The controller 12 continuously acquires information on the remaining battery capacity of each electricity storage apparatus 20. The controller 12 determines the chargeable capacity of each electricity storage apparatus 20 based on the storage battery capacity of each electricity storage apparatus 20 as stored in the memory 13, the remaining battery capacity acquired from each storage battery, and other conditions.

When the controller 12 acquires, via the communication interface 11, the amount of supplied electricity supplied by the user to any of the electricity storage apparatuses 20, the controller 12 adds the electricity asset corresponding to the amount of supplied electricity to the cumulative value of the user's electricity assets as stored in the memory 13. The electricity storage apparatus 20 to which the user supplied the electricity stores the acquired electricity in the electricity storage apparatus 20 within the chargeable capacity range. The controller 12 adds the amount of electricity stored by the electricity storage apparatus 20 to the cumulative value of the amount of stored electricity in the electricity asset. The electricity exceeding the chargeable capacity of the electricity storage apparatus 20 to which the user supplied electricity is sold by the controller 12 to an external party, such as an electricity provider, via the electricity network 51. The controller 12 can add a virtual valuable corresponding to the compensation for the electricity sold via the electricity storage apparatus 20 to the cumulative value of the virtual valuables in the electricity asset.

When the controller 12 acquires, via the communication interface 11, the amount of received electricity received by the user from any of the electricity storage apparatuses 20, the controller 12 subtracts the electricity asset corresponding to the amount of received electricity from the cumulative value of the user's electricity assets as stored in the memory 13.

The display 14 is a display for displaying information to the operator of the information processing apparatus 10. The display 14 may be a liquid crystal display (LCD) or an organic electro luminescence (EL) display but is not limited to these examples. Under the control of the controller 12, the display 14 can display information about the electricity storage apparatus 20. For example, the display 14 can display the remaining battery capacity of each electricity storage apparatus 20.

The input interface 15 includes means for input to the information processing apparatus 10. The input interface 15 may include physical keys such as a keyboard, capacitive keys, a pointing device, or a touchscreen integrally provided with a display. The input interface 15 is used by the operator of the information processing apparatus 10 to input instructions directly to the information processing apparatus 10.

### (Configuration of electricity storage apparatus)

As illustrated in FIG. 5, the electricity storage apparatus 20 includes the storage battery 21, a power conditioning subsystem (PCS) 22, a controller 23, and a communication interface 24.

The storage battery 21 is the main body that stores electricity in the electricity storage apparatus 20. The storage battery 21 may include a plurality of storage cells. The storage battery 21 is also referred to as a battery or battery module. The storage battery 21 includes, but is not limited to, a lithium-ion battery. The storage battery 21 includes present and future available storage batteries, including lead-acid batteries, nickel-metal hydride batteries, sodium-sulfur batteries, lithium-sulfur batteries, magnesium batteries, and all solid-state batteries. In the present specification, charging the storage battery 21 in the electricity storage apparatus 20 may be expressed as charging the electricity storage apparatus 20. Also, being chargeable to the storage battery 21 of the electricity storage apparatus 20 may be expressed as being chargeable to the electricity storage apparatus 20.

The power conditioning subsystem 22 is an apparatus that converts electricity between DC current generated by the storage battery 21 and the AC current used by the electricity network 51 and user facility 30. The power conditioning subsystem 22 includes a circuit that converts between DC current and AC current, a circuit that boosts or steps down the DC current, a switch that switches the power path, and the like. The power conditioning subsystem 22 is further provided with a current sensor and voltage sensor in each area. The power conditioning subsystem 22 can be configured in various ways.

The controller 23 performs various controls related to the operation of the electricity storage apparatus 20 and also generates information to be transmitted to the information processing apparatus 10. Like the controller 12 of the information processing apparatus 10, the controller 23 includes at least one processor, at least one dedicated circuit, or a combination thereof. The processor is a general-purpose processor, such as a central processing unit (CPU), or a dedicated processor specialized for particular processing. The controller 23 may include a memory that stores information used by the controller 23 and information generated by the controller 23, along with programs and the like. The memory includes at least one semiconductor memory, at least one magnetic memory, at least one optical memory, or a combination of at least two of these. The controller 23 can achieve control functions by executing programs stored in the memory. The memory may also store information on the current remaining battery capacity and chargeable capacity of the electricity storage apparatus.

In cooperation with the controller 12 of the information processing apparatus 10, the controller 23 controls the storage of electricity from the electricity generation equipment 31 and the electricity network 51 in the electricity storage apparatus 20, the supply of electricity from the electricity storage apparatus 20 to the electricity consumption equipment 32, the sale of electricity from the electricity storage apparatus 20 to the electricity network 51, and the like. The controller 23 may transmit information, such as the amount of electricity supplied from the user facility 30, the amount of electricity supplied to the user facility 30, and the amount of electricity sold via the electricity network 51, to the information processing apparatus 10 via the communication interface 24.

Like the communication interface 11 of the information processing apparatus 10, the communication interface 24 includes at least one interface for external communication that connects to the communication network 50. The interface for communication may be either a wired or wireless communication interface. Under the control of the controller 23, the communication interface 24 can communicate with the information processing apparatus 10.

### (User terminal)

The user terminal 40 is an apparatus used by the user who owns the user facility 30, or if the user is a business, by a person belonging to the business. The user terminal 40 may be, but is not limited to, a portable information terminal. For example, a general-purpose electronic device such as a smartphone, tablet, or PC, or a dedicated electronic device can be used as the user terminal 40. The user terminal 40 may have a Global Positioning System (GPS) receiver and be configured to calculate positional information. The user terminal 40 can have installed thereon an application corresponding to the electricity storage system 1. The user can operate the user terminal 40 to search for a user facility 30 where electricity can be used. The user can operate the user terminal 40 to utilize a service to receive electricity from the electricity consumption equipment 32 at any user facility 30, for example, a charging service for electric vehicles or portable information terminals.

### (Information processing executed by information processing apparatus)

The information processing method performed by the controller 12 of the information processing apparatus 10 is described below with reference to the drawings. The information processing apparatus 10 may be configured to read programs recorded on a non-transitory computer readable medium to implement the below-described processing performed by the controller 12. Examples of the non-transitory computer readable medium include, but are not limited to, a magnetic storage medium, an optical storage medium, a magneto-optical storage medium, and a semiconductor storage medium.

### (Method of charging electricity storage apparatus)

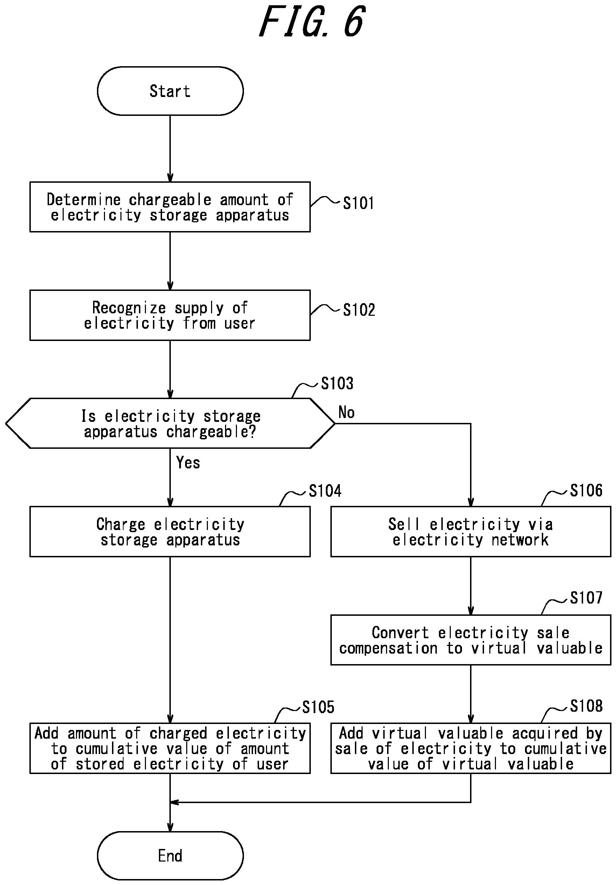

The processing to be executed by the information processing apparatus 10 when electricity is supplied from the user facility 30 to the electricity storage apparatus 20 is described below with reference to the flowchart in FIG. 6. The controller 12 of the information processing apparatus 10 may share execution of the below-described processing with the controller 23 of each electricity storage apparatus 20. In the following, the processing that the controller 12 of the information processing apparatus 10 shares with each of the electricity storage apparatuses 20 is also described as being executed by the controller 12.

First, the controller 12 determines the chargeable amount of each electricity storage apparatus 20 in advance by continuously acquiring the remaining battery capacity from each electricity storage apparatus 20 (step S101). The latest chargeable amount of each electricity storage apparatus 20 is stored in the memory 13.

Next, the controller 12 receives a notification from the controller 23 of the first electricity storage apparatus 20A included in the plurality of electricity storage apparatuses 20 and recognizes that there is a supply of electricity from a user to the first electricity storage apparatus 20A (step S102). In this case, at the user facility 30A associated with the first electricity storage apparatus 20A, the amount of electricity generated by the electricity generation equipment 31A is greater than the amount of electricity consumed by the electricity consumption equipment 32A. The user facility 30A therefore supplies electricity to the first electricity storage apparatus 20A.

In cooperation with the controller 23 of the first electricity storage apparatus 20A, the controller 12 determines whether the first electricity storage apparatus 20A is chargeable (step S103). In a case in which the chargeable amount of the first electricity storage apparatus 20A is greater than 0, the first electricity storage apparatus 20A is determined to be chargeable. In a case in which the chargeable amount of the first electricity storage apparatus 20A is 0, the first electricity storage apparatus 20A is determined not to be chargeable. The chargeability of the first electricity storage apparatus 20A may switch while the first electricity storage apparatus 20A is receiving electricity from the user facility 30A. The processing in step S103 may be performed independently by the controller 23 of the first electricity storage apparatus 20A, and the result of the determination as to whether the first electricity storage apparatus 20A is chargeable may be transmitted to the information processing apparatus 10.

In a case in which the first electricity storage apparatus 20A is chargeable (step S103: Yes), the controller 12 cooperates with the controller 23 of the first electricity storage apparatus 20A to charge the electricity supplied from the user facility 30A to the first electricity storage apparatus 20A (step S104). The processing in step S104 may be performed independently by the controller 23 of the first electricity storage apparatus 20A, with only information on the amount of power charged to the first electricity storage apparatus 20A being transmitted to the information processing apparatus 10.

After step S104, the controller 12 adds the amount of electricity charged in the first electricity storage apparatus 20A to the cumulative value of the amount of stored electricity as stored in the memory 13 to update the information on the user's amount of stored electricity (step S105).

On the other hand, in a case in which the first electricity storage apparatus 20A is not chargeable in step S103 (step S103: No), the controller 12 cooperates with the controller 23 to sell electricity supplied by the user facility 30A via the electricity network 51 (step S106). The controller 12 sells electricity in accordance with electricity sale conditions provided by the electricity transaction server 52.

After step S106, the controller 12 converts the compensation resulting from the sale of electricity into a virtual valuable. The virtual valuable is, for example, an electricity cryptocurrency that is guaranteed to be exchanged for electricity in the electricity storage system 1.

After step S107, the controller 12 updates the information on the user's virtual valuables by adding the virtual valuable converted from the compensation resulting from the sale of electricity to the cumulative value of the virtual valuables as stored in the memory 13 (step S108).

As explained above, the user supplying electricity to the first electricity storage apparatus 20A adds to the cumulative value of the electricity assets of the user, i.e., at least one of the amount of stored electricity and the virtual valuables.

### (Display of information on electricity assets)

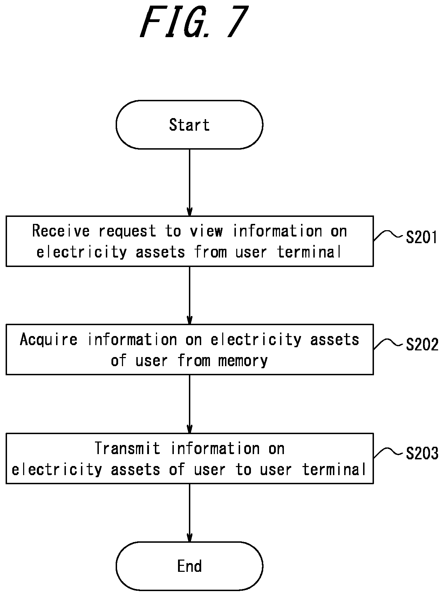

The user can operate the user terminal 40 to display the electricity assets held by the user on the display of the user terminal 40. Based on FIG. 7, the processing executed by the controller 12 of the information processing apparatus 10 when the user displays the electricity assets using the user terminal 40 will be described.

First, the user launches an application for the electricity storage system 1 using the user terminal 40 and performs an operation to display information on the electricity assets. As a result, a request to view the information on the electricity assets is transmitted from the user terminal 40 to the information processing apparatus 10 via the communication network 50. The controller 12 receives this viewing request (step S201). The viewing request includes information such as a user ID to identify the user.

Using the user ID included in the viewing request, the controller 12 searches for information, stored in the memory 13, on the user's electricity assets. The controller 12 acquires the information on the electricity assets corresponding to the user ID (step S202).

The controller 12 transmits the information on the user's electricity assets acquired in step S202 to the user terminal 40 (step S203). As a result, the application on the user terminal 40 that receives the information on the electricity assets displays the information of the user assets on the display of the user terminal 40. The cumulative value of the amount of stored electricity and the cumulative value of the virtual valuables may each be displayed on the display of the user terminal 40.

### (Inquiry and response regarding available electricity storage apparatuses)

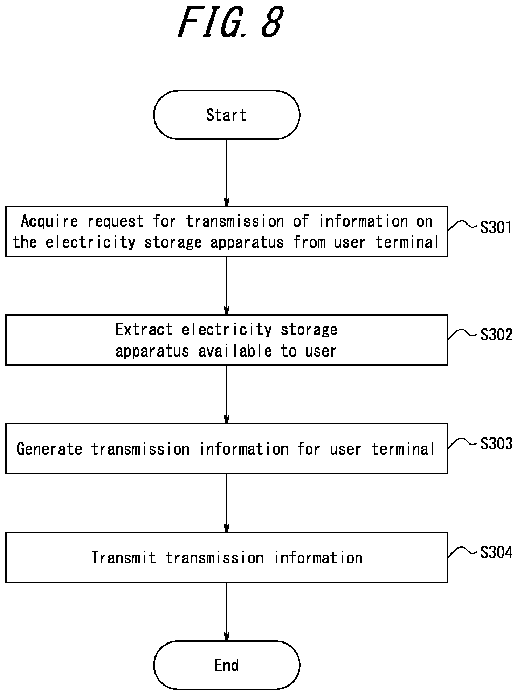

Next, the procedures for inquiring about available electricity storage apparatuses 20 when a user wishes to receive electricity from any of the electricity storage apparatuses 20 other than the first electricity storage apparatus 20A corresponding to the user's own user facility 30A is described with reference to FIG. 8. For example, it is assumed that a user charges an electric vehicle, using the electricity stored in the electricity storage apparatus 20, at a location away from the user's own user facility 30A.

First, the user uses the user terminal 40 to request the transmission of information on an electricity storage apparatus 20 installed at a user facility 30 where a specific service, such as an electric vehicle charging service, can be provided. The request for transmission of information on the electricity storage apparatus 20 generated by the user terminal 40 may include positional information indicating the current position of the user terminal 40. The controller 12 of the information processing apparatus 10 acquires this request for transmission of information on the electricity storage apparatus 20 via the communication interface 11 (step S301).

The controller 12 that has acquired the request for transmission of information on the electricity storage apparatus 20 searches for the electricity storage apparatuses 20 at which the service desired by the user is available from the information on the electricity storage apparatuses stored in the memory 13 of the information processing apparatus 10 (step S302). The controller 12 may search for and extract only the electricity storage apparatuses 20 within a predetermined distance range from the current position of the user terminal 40 among the electricity storage apparatuses 20 stored in the memory 13.

The controller 12 generates transmission information to be transmitted to the user terminal 40 as a response to the request, from the user terminal 40, for transmission of information on the electricity storage apparatuses 20 (step S303). The transmission information may include information on a plurality of electricity storage apparatuses 20 corresponding to the user facilities 30 where the user can receive the specified service. The information on the electricity storage apparatuses 20 may include positional information on the electricity storage apparatuses 20 and/or information on the user facility 30 where the electricity storage apparatuses 20 are installed.

The controller 12 transmits the transmission information generated in step S303 to the user terminal 40 via the communication interface 11 (step S304). The user of the user terminal 40 that receives the transmission information may refer to one or more electricity storage apparatuses 20 displayed on the user terminal 40 and select the electricity storage apparatus 20 from which to receive the service.

As described above, the user can acquire information on the electricity storage apparatuses 20, other than the first electricity storage apparatus 20A associated with the user's own user facility 30A, that are available for the desired service.

### (Receiving electricity from another electricity storage apparatus)

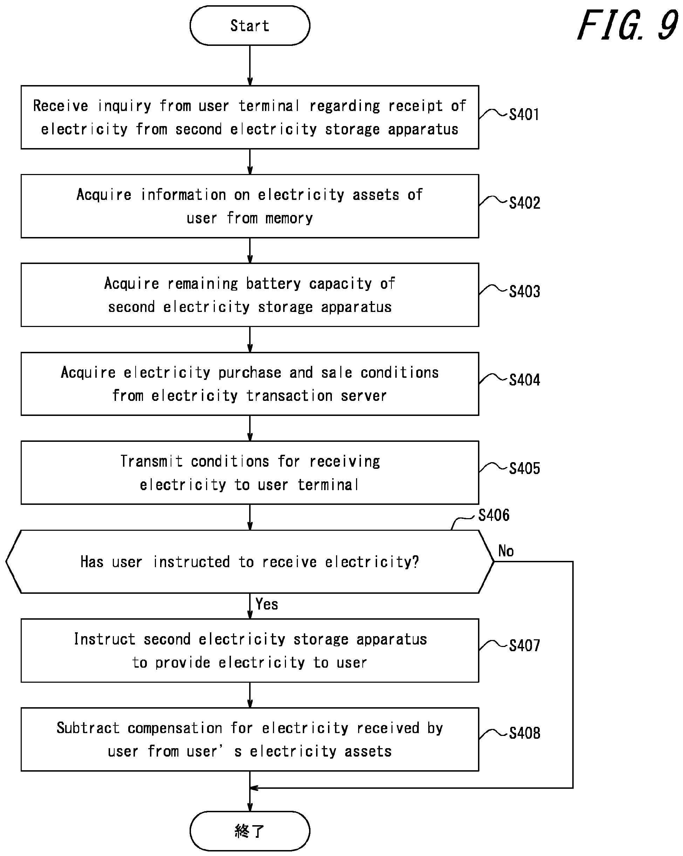

Next, the processing when a user makes a selection on the user terminal 40 to receive electricity from a second electricity storage apparatus 20B, which is different from the first electricity storage apparatus 20A, included in the plurality of electricity storage apparatuses 20 is described with reference to FIG. 9. First, the controller 12 receives an inquiry from the user terminal 40 via the communication interface 11 regarding receipt of electricity from the second electricity storage apparatus 20B (step S401). The inquiry from the user terminal 40 includes a user ID.

The controller 12 retrieves information on the user's electricity assets from the memory 13 based on the user ID (step S402). The information on the electricity assets includes information on the amount of stored electricity and virtual valuables, such as electricity cryptocurrency, held by the user, as illustrated in FIG. 4.

The controller 12 acquires the remaining battery capacity of the second electricity storage apparatus 20B from the memory 13 (step S403). The controller 12 may query the second electricity storage apparatus 20B to acquire the current remaining battery capacity of the second electricity storage apparatus 20B.

The controller 12 acquires the electricity purchase and sale conditions from the electricity transaction server 52. In particular, the controller 12 acquires the price information for the case of buying electricity via the electricity network 51 (step S404). Steps S402 to S404 are not limited to this order and may be performed in any order.

The controller 12 determines the transaction conditions favorable to the user based on the information acquired by steps S402 to S404 and transmits, to the user terminal 40, a favorable transaction method according to the conditions (step S405). As the transaction method, the user can receive electricity using the amount of stored electricity that is stored as an electricity asset, buy electricity from an external source via the electricity network 51 using a virtual valuable, or acquire electricity through a combination of these methods. The controller 12 may acquire electricity in exchange for the amount of stored electricity when the electricity purchase price obtained from the electricity transaction server 52 is high. The controller 12 may also acquire electricity in exchange for a virtual valuable when the electricity purchase price obtained from the electricity transaction server 52 is low. The controller 12 may set a threshold for the electricity purchase price, use the amount of stored electricity when the electricity purchase price is higher than the threshold, and use a virtual valuable such as electricity cryptocurrency when the electricity purchase price is lower than the threshold.

In a case in which the remaining battery capacity in the second electricity storage apparatus 20B is insufficient, the controller 12 may choose to buy electricity from an external source via the electricity network 51 as the transaction method.

In step S405, instead of transmitting a single advantageous transaction method to the user terminal 40, the controller 12 may generate a plurality of options for the user to choose from and transmit the options to the user terminal 40.

In a case in which the user operates the user terminal 40 to issue an instruction for receipt of electricity according to the transaction method transmitted by the controller 12 to the user terminal 40 in step S405 (step S406: Yes), the processing by the controller 12 proceeds to the following step S407 in response to receipt of this instruction.

In step S407, the controller 12 instructs the second electricity storage apparatus 20B to provide electricity to the user (step S407). This enables the user to receive electricity from the second electricity storage apparatus 20B or from the electricity consumption equipment 32B connected to the second electricity storage apparatus 20B. For example, the user can charge an electric vehicle from a charging station provided at the user facility 30B as one piece of electricity consumption equipment 32B.

The controller 12 subtracts the electricity asset corresponding to the compensation for the electricity received by the user from the cumulative value of the user's electricity assets as stored in the memory 13 (step S408). In a case in which the user used electricity stored in the second electricity storage apparatus 20B, the controller 12 subtracts the amount of electricity equivalent to the used electricity from the amount of stored electricity in the user's electricity assets. In a case in which the user used electricity purchased from an external source via the electricity network 51, the controller 12 subtracts a virtual valuable corresponding to the cost of acquiring the electricity from the external source from the cumulative value of the virtual valuables in the user's electricity assets.

On the other hand, when the user wishes to use the amount of stored electricity held as an electricity asset, and the second electricity storage apparatus 20B has less remaining battery capacity than the amount of stored electricity held by the user as an electricity asset, the controller 12 may deduct the amount of electricity purchased from an external source from the amount of stored electricity in the user's electricity assets. In this way, the controller 12 can guarantee an exchange with the electricity in the user's electricity assets.

As described above, according to an embodiment of the present disclosure, the user can use the electricity stored in the first electricity storage apparatus 20A via the second electricity storage apparatus 20B, which is different from the first electricity storage apparatus 20A. This enables the user to use a plurality of geographically distributed electricity storage apparatuses 20 as if they were a single virtual electricity storage apparatus 20, thereby improving user convenience. This improves the technology for depositing the user's electricity.

When the electricity stored in the first electricity storage apparatus 20A is used via the second electricity storage apparatus 20B, there is no need to actually transfer electricity between the first electricity storage apparatus 20A and the second electricity storage apparatus 20B, thereby eliminating the need to pay wheeling charges for transferring electricity. For example, there is no need to transfer electricity between different electricity storage apparatuses 20 as long as the amount of electricity that is charged in excess to the electricity storage apparatus 20 by the user who owns the user facility 30 is balanced with the amount of electricity that other users receive.

In addition, since electricity is actually stored in the electricity storage apparatuses 20 that are distributed among different locations, the present electricity storage system 1 differs from conventional systems that only record the amount of deposited electricity but do not actually store electricity. In the present electricity storage system 1, for example, users can receive electricity from the distributed electricity storage apparatuses 20 even when the electricity supply from the electricity provider is disrupted due to a large-scale disaster such as an earthquake or typhoon.

The virtual valuables included in the electricity assets of the present disclosure have a value backed by electricity, since the electricity storage system 1 guarantees the exchange of the virtual valuables for electricity. For example, virtual valuables can be exchanged for cash or traded among users.

Note that the present disclosure is not limited to the above embodiments, and a variety of modifications and changes are possible. For example, the functions or the like included in the various components or steps may be reordered in any logically consistent way. Furthermore, components or steps may be combined into one or divided. Such embodiments are also to be understood as falling within the scope of the present disclosure.

### REFERENCE SIGNS LIST

- 1: Electricity storage system
- 10: Information processing apparatus
- 11: Communication interface
- 12: Controller
- 13: Memory
- 14: Display
- 15: Input interface
- 20: Electricity storage apparatus
- 21: Storage cell
- 22: Power conditioning subsystem (PCS)
- 23: Controller
- 24: Communication interface
- 20A: First electricity storage apparatus
- 20B: Second electricity storage apparatus
- 30: User facility
- 30A: First user facility
- 30B: Second user facility
- 31: Electricity generation equipment
- 31A: First electricity generation equipment
- 31B: Second electricity generation equipment
- 32: Electricity consumption equipment
- 32A: First electricity consumption equipment
- 32B: Second electricity consumption equipment
- 40: User terminal
- 50: Information network
- 51: Electricity network
- 52: Electricity transaction server
- 53: Point management server
- 54: Financial institution server

## Claims

1. An information processing apparatus comprising:
a memory storing a cumulative value of an asset that is owned by a user and is in a predetermined form associated with electricity;
a communication interface configured to communicate with a plurality of electricity storage apparatuses that are geographically distributed and are configured to be capable of buying and selling electricity via an electricity network; and
a controller configured to execute processing to add, to the cumulative value stored in the memory, the asset corresponding to an amount of supplied electricity supplied by the user to a first electricity storage apparatus included in the plurality of electricity storage apparatuses when acquiring the amount of supplied electricity via the communication interface, and to execute processing to subtract, from the cumulative value, the asset corresponding to an amount of received electricity received by the user from a second electricity storage apparatus, different from the first electricity storage apparatus, included in the plurality of electricity storage apparatuses when acquiring the amount of received electricity via the communication interface, wherein
the cumulative value is a cumulative value of an amount of stored electricity that the user stores in the plurality of electricity storage apparatuses and a virtual valuable corresponding to compensation for electricity sold by the user via the plurality of electricity storage apparatuses.

2. The information processing apparatus according to claim 1, wherein the controller is configured to guarantee exchange of the asset for electricity of any of the plurality of electricity storage apparatuses.

3. The information processing apparatus according to claim 1, wherein the virtual valuable includes at least one of cryptocurrency, electronic money, and points.

4. The information processing apparatus according to claim 1, wherein the controller is configured to determine a chargeable capacity of the first electricity storage apparatus, and when acquiring an amount of supplied electricity from the user exceeding the chargeable capacity, to sell electricity exceeding the chargeable capacity and add, to the cumulative value of the asset owned by the user, the virtual valuable corresponding to the compensation obtained by selling the electricity.

5. The information processing apparatus according to claim 1, wherein when receiving a request, from a user terminal used by the user, to view information on the asset of the user, the controller is configured to transmit information, stored in the memory, including the amount of stored electricity owned by the user and the cumulative value of the virtual valuable as the information on the asset.

6. The information processing apparatus according to claim 5, wherein the controller is configured to receive, from the user terminal, an instruction to receive electricity, the instruction specifying the second electricity storage apparatus and one of the amount of stored electricity and the virtual valuable, and when the user receives the electricity from the second electricity storage apparatus, the controller is configured to subtract the asset corresponding to the amount of received electricity from the cumulative value of the specified one of the amount of stored electricity and the virtual valuable included in the asset of the user.

7. An electricity storage system comprising:
a plurality of electricity storage apparatuses that are geographically distributed and are configured to be capable of buying and selling electricity via an electricity network; and
an information processing apparatus comprising a memory storing a cumulative value of an asset that is owned by a user and is in a predetermined form associated with electricity, a communication interface configured to communicate with the plurality of electricity storage apparatuses, and a controller configured to execute processing to add, to the cumulative value stored in the memory, the asset corresponding to an amount of supplied electricity supplied by the user to a first electricity storage apparatus included in the plurality of electricity storage apparatuses when acquiring the amount of supplied electricity via the communication interface, and to execute processing to subtract, from the cumulative value, the asset corresponding to an amount of received electricity received by the user from a second electricity storage apparatus, different from the first electricity storage apparatus, included in the plurality of electricity storage apparatuses when acquiring the amount of received electricity via the communication interface, wherein
the cumulative value is a cumulative value of an amount of stored electricity that the user stores in the plurality of electricity storage apparatuses and a virtual valuable corresponding to compensation for electricity sold by the user via the plurality of electricity storage apparatuses.

8. An information processing method to be executed by a controller of an information processing apparatus comprising a memory storing a cumulative value of an asset that is owned by a user and is in a predetermined form associated with electricity, a communication interface configured to communicate with a plurality of electricity storage apparatuses that are geographically distributed and are configured to be capable of buying and selling electricity via an electricity network, and the controller, the information processing method comprising:
adding, to the cumulative value stored in the memory, the asset corresponding to an amount of supplied electricity supplied by the user to a first electricity storage apparatus included in the plurality of electricity storage apparatuses when the amount of supplied electricity is acquired via the communication interface; and
subtracting, from the cumulative value, the asset corresponding to an amount of received electricity received by the user from a second electricity storage apparatus, different from the first electricity storage apparatus, included in the plurality of electricity storage apparatuses when acquiring the amount of received electricity via the communication interface, wherein
the cumulative value is a cumulative value of an amount of stored electricity that the user stores in the plurality of electricity storage apparatuses and a virtual valuable corresponding to compensation for electricity sold by the user via the plurality of electricity storage apparatuses.
